# EUROPEAN PATENT APPLICATION

(11) **EP 2 055 940 A2**
(43) Date of publication of application: **06.05.2009**
(21) Application number: 08166425.2
(22) Date of filing: 13.10.2008
(51) Int. Cl.: F03D 7/00, F03D 7/02

(54) **Wind farm and method for controlling same**

(30) Priority: 30.10.2007 US 928244
(71) Applicant: General Electric Company, Schenectady, NY 12345 (US)
(72) Inventor: Uphues, Ulrich, 30459, Hanover (DE)
(74) Representative: Bedford, Grant Richard

(57) **Abstract**

A windfarm (1000) comprising a plurality of wind turbines (100, 110), an ice detection sensor (200) adapted to detect an icing condition of at least one of said plurality of wind turbines (100, 110), and a main controller (300) connected to said ice detection sensor (200) and to at least two of said wind turbines (100, 110), wherein the main controller (300) is adapted to control the operation of said at least two wind turbines (100, 110) based on an icing condition detected by said ice detection sensor (200).

## Description

A wind farm and a method for controlling a wind farm are disclosed herein.

In the past, wind turbines are experiencing an increasing demand in sales. Therefore, more and more wind turbines are also planned and erected at sites with higher icing probability during the year. For example, such sites may be located in cold and hash climate like northern Europe, off-shore locations or alpine areas. These conditions lead to an increased probability of icing, *i.e.,* ice accretion. Particularly, icing at the rotor blades of the turbines results in reduced energy output. This is based on increased mass loads on the wind turbine as well as in deterioration of the aerodynamic properties of the wind turbine. Further, regulations to shut down the wind turbine in the event ice-throw may occur which further deteriorates the energy output. Typically, shut down regulations are stricter for wind turbines located in populated areas and/or near public roads.

In view of the above according to an aspect of the present invention, a windfarm is provided, the wind farm including a plurality of wind turbines, an ice detection sensor adapted to detect an icing condition of at least one of the plurality of wind turbines, and a main controller connected to the ice detection sensor and to at least two of the wind turbines, wherein the main controller is adapted to control the operation of the at least two wind turbines based on an icing condition detected by the ice detection sensor.

Further aspects, advantages and features are apparent from the dependent claims, the description and the accompanying drawings.

According to an embodiment, a wind park is provided, the wind park including at least two wind power plants connected to an icing detection unit, wherein the at least two wind power plants share the icing detection unit and wherein the operation of the at least two wind power plants is controllable on the basis of an icing status of at least one of said wind power plants detected by the shared icing detection unit.

According to a further embodiment, a method for controlling the operation of wind turbines in a windfarm is provided, the method including the steps of detecting an icing condition of at least one wind turbine comprised in the wind farm, and controlling the operation of at least two wind turbines comprised in the wind farm on the basis of the detected icing condition of the at least one wind turbine.

Various aspects and embodiments of the present invention will now be described in connection with the accompany drawings, in which:
Fig. 1 shows a wind turbine as it may be used in a windfarm according to an embodiment of the present invention.
Fig. 2 shows a windfarm according to an embodiment.
Fig. 3 shows a windfarm according to another embodiment.
Fig. 4 shows a windfarm according to an even further embodiment.
Fig. 5 shows a flow chart of a control method according to an embodiment.

Reference will now be made in detail to the various embodiments of the invention, one or more examples of which are illustrated in the figures. Each example is provided by way of explanation of the invention, and is not meant as a limitation. For example, features illustrated or described as part of one embodiment can be used on or in conjunction with other embodiments to yield yet a further embodiment. It is intended that such modifications and variations are included herewith.

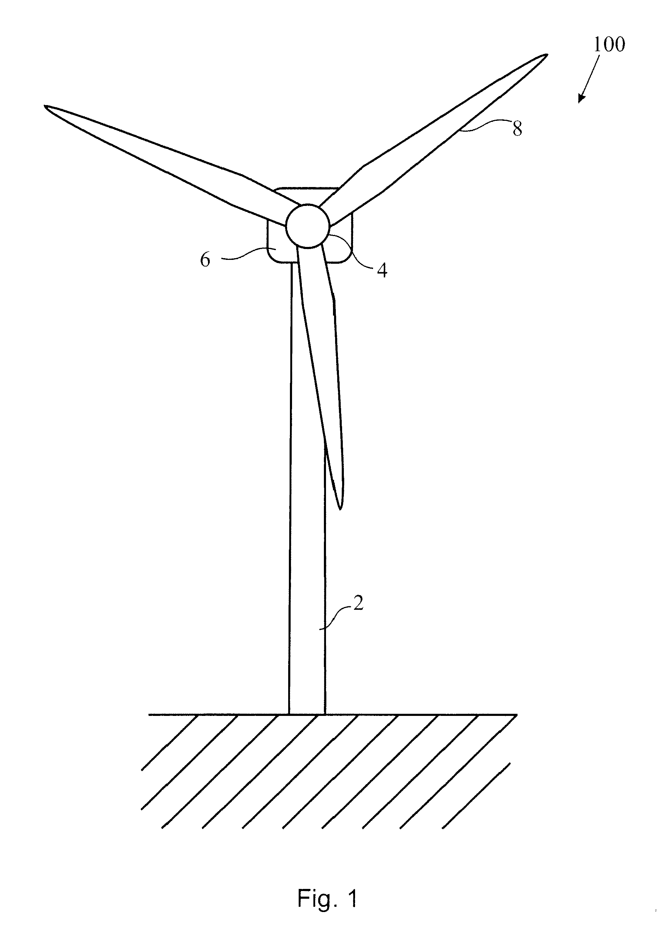

Fig. 1 shows a wind turbine 100 as it may be used in a windfarm according to an embodiment. Therein, the wind turbine 100 includes a tower 2 on which a machine nacelle 6 is mounted. At one end side of the nacelle 6, a rotor hub 4 bearing rotor blades 8 is mounted. The wind rotor formed by rotor hub 4 and rotor blades 8 can capture kinetic energy from the wind so that it rotates about a substantially horizontal axis. Typically, an electric generator (not shown) is disposed within nacelle 6 and connected to the wind rotor. The rotation of the wind rotor is applied to the electric generator to produce electric power. As has been described above, under certain atmospheric conditions ice will develop on the turbine components, for example, on the anemometers and the blades. The ice build-up may result in ice-throw from the turbine blades and, as a result, the wind turbine may need to be shut down.

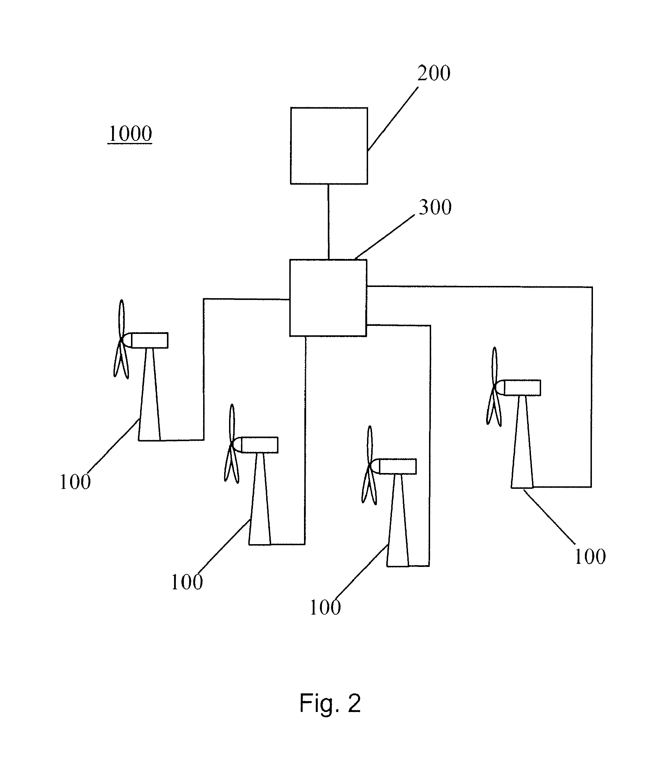

Fig. 2 shows a windfarm 1000 according to an embodiment. Windfarm 1000 is formed by a plurality of wind turbines 100. Although only four wind turbines 100 are shown in Fig. 2, it will be understood by those skilled in the art that windfarm 1000 may include any number of wind turbines equal to or greater than two. Windfarm 1000 further includes an ice detection sensor 200 for detecting an icing condition of at least one of said plurality of wind turbines. Ice detection sensor 200 may be of any configuration known in the art, and may in particular include a camera for monitoring the wind turbines 100 of the windfarm. However, also other configurations of ice sensors are known and may be applied as well. Ice detection sensor 200 may monitor the icing condition of only one wind turbine 100, of several or even all wind turbines 100 in the wind farm. In particular, icing detection sensor 200 is adapted to detect whether a substantial ice build-up is formed on the wind turbine(s) or not. Windfarm 1000 further includes a main controller 300 connected to the ice detection sensor 200 and to at least two of the wind turbines 100. Main controller 300 is adapted to control the operation of the at least two wind turbines 100 based on an icing condition detected by the ice detection sensor 200. For example, main controller 300 may shut down wind turbines 100 if sensor 200 detects that considerable ice build-up has formed on the rotor blades 8 of the turbines. In this case, main controller 300 sends a shut-down signal to the wind turbines 100 connected to main controller 300. According to another example, ice detection sensor 200 may detect that a previously detected icing condition has terminated, i.e. that the rotor blades 8 of the wind turbines 100 are ice-free. If the wind turbines 100 were shut down because of the icing condition, main controller 300 may now initiate a start-up sequence for the wind turbines. Thus, the wind turbines 100 in the windfarm 1000 can be brought back up online again.

Due to the above-described configuration, only a single ice detection sensor 200 is required to control the complete windfarm 1000. In other words, at least two wind turbines or wind power plants of wind park 1000 share an icing detection unit and can be collectively controlled on the basis of an icing status detected by the shared icing detection unit. Therefore, it is not longer necessary to equip each individual wind turbine 100 within windfarm 1000 with its own ice detection sensor. As a result, the costs of each turbine can be considerably reduced. Furthermore, it is not longer necessary to monitor each individual wind turbine. For example, the icing status of only one or two wind turbines 100 may be monitored but all the wind turbines comprised in wind park 1000 may be collectively controlled based on the monitoring result. For example, all the turbines in windfarm 1000 may be collectively shut down when icing is detected. Thus, it can be avoided that only some turbines are shut down while others still run as it may happen due to tolerances in ice detection if each turbine is equipped with its own ice detection sensor.

In the above example, only one ice detection sensor is utilized for the control of all the wind turbines 100 in the windfarm 1000. However, it will be understood by those skilled in the art that also one or more redundant sensors may be provided as a backup system or as a system for gathering higher statistical accuracy. Furthermore, in larger windfarms it may be expedient to divide the wind turbines in two or more sub groups, each of those subgroups being equipped with its own ice detection sensor and main controller. In this event, the signals of the ice detection sensor of the sub group can be distributed to and processed by all wind turbines included in the subgroup. In particular, the configuration will be still such that two or more wind turbines share one ice detection unit.

In the embodiment shown in Fig. 2, the ice detection sensor 200 is not mounted on a wind turbine 100 but separately. For example, ice detection sensor 200 may include a digital camera imaging one or more of wind turbines 100, and an image processing tool for automated detection of turbine and/or blade icing. Also, other ice detectors may be used.

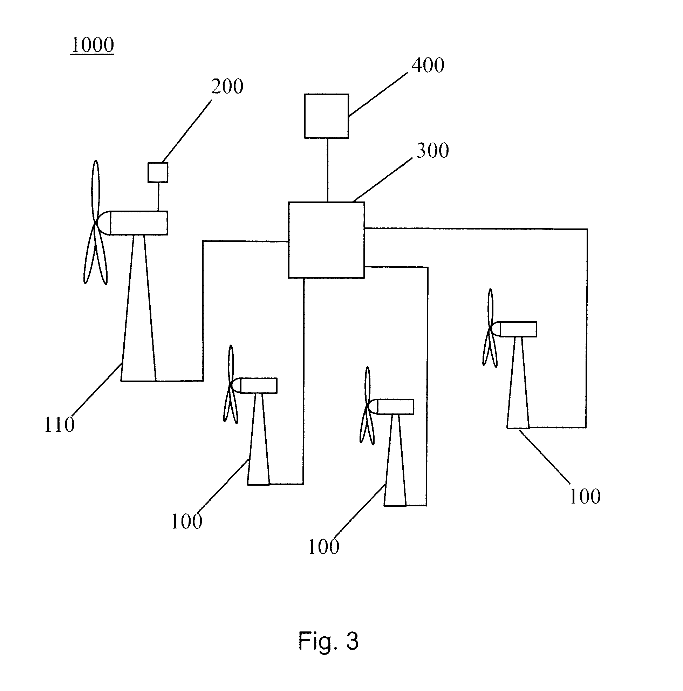

Fig. 3 shows a windfarm 1000 according to another embodiment in which the ice detection sensor 200 is mounted on one of the wind turbines 110. For example, wind turbine 110 is of a conventional type including a conventional icing detection unit. The other wind turbines 100 are not equipped with individual icing detection units, thus realizing lower production costs. The ice detection unit 200 is connected to main controller 300 which controls the collective behavior of the wind turbines 110, 100 as described above.

Furthermore, windfarm 1000 includes a web cam 400 for detecting an ice-free condition of at least one wind turbine within the windfarm. In other words, web cam 400 is a sensor for detecting a non-icing or ice-free condition. Like ice detection unit 200, also web cam 400 is connected to main controller 300. For example, wind turbines 100 may have been previously shut down by main controller 300 due to an icing condition detected by ice detection unit 200. If web cam 400 now detects that the rotor blades 8 are again ice-free, it signals to main controller 300 that operation may be resumed. Then, main controller 300 initiates a start-up sequence for wind turbines 100, 110 to bring them back up online. According to another embodiment, the windfarm 1000 is re-activated manually, typically via remote control, on the basis of the web cam pictures. Likewise also for the opposite case, namely detecting an ice-free condition, the measurement results of a single sensor may be shared by several wind turbines to coordinate their control collectively.

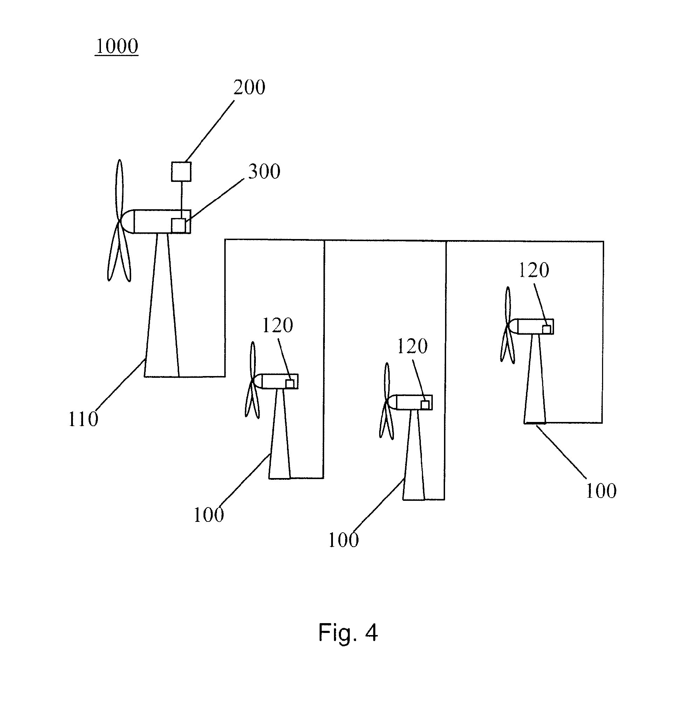

Fig. 4 shows a windfarm according to an even further embodiment. Therein, it is shown that not only ice detection sensor 200 but also main controller 300 can be located at a specific wind turbine 110. In particular, the turbine controller of wind turbine 110 is adapted to serve as the main controller 300. For this purpose, main controller 300 is connected to each of the turbine controllers 120 provided in the other wind turbines 100 which are not equipped with an ice detection sensor 200. For example, when an icing condition is detected by ice detection sensor 200 main controller 300 instructs turbine controller 120 to initiate a shut-down sequence. Although not shown in Fig. 4, a web cam 400 may also be provided to detect when the wind turbines are ice-free again. In this event, main controller 300 will instruct turbine controllers 120 to initiate a start-up sequence for their respective turbine.

It will be understood by those skilled in the art that in any of the above-described or other embodiments, the main controller 300 may be adapted to control each wind turbine 100, 110 and/or each wind turbine controller 120 individually. In embodiments, main controller 300 may be connected to the turbine controllers 120 at each individual wind turbine 100, 110, wherein the main controller 300 is adapted to control and/or instruct the turbine controllers 120. For example, main controller 300 may be adapted to shut down two or more wind turbines 100, 110 on the basis of an icing condition detected by the ice detection sensor 200. In particular, main controller 300 may be adapted to shut down all the wind turbines comprised in the windfarm or in a subgroup of the windfarm on the basis of the detected icing condition. On the other hand, main controller 300 may also be adapted to start up two or more wind turbines 100, 110 on the basis of an icing condition detected by the ice detection sensor 200 or an additional sensor 400 for detecting an ice-free condition. Also in this embodiment, main controller 300 may be adapted to start up all the wind turbines comprised in the windfarm or a subgroup of the windfarm on the basis of the detected ice-free condition.

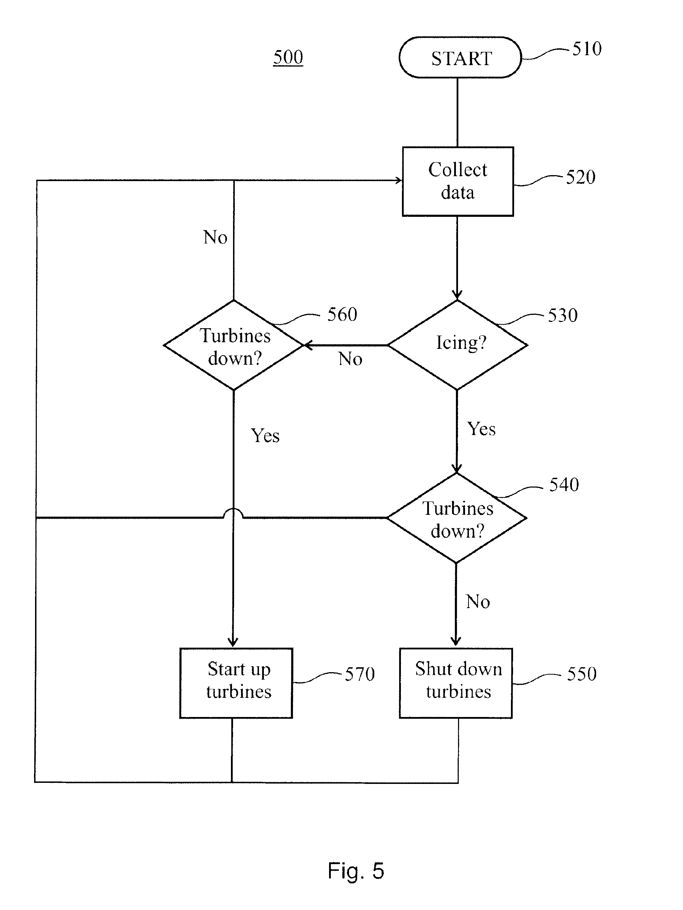

Fig. 5 shows a flow chart of a control method 500 according to an embodiment. After the starting the control method in step 510, ice detection sensor data are collected in step 520. The collected data are examined to detect an icing condition, e.g. ice build-up at the rotor blades 8 of the monitored wind turbine(s), in step 530. If icing is detected, it is checked in step 540 whether the wind turbines have already been shut down. In case that wind turbines are already out of operation, data collection is continued in step 520. If, however, the turbines are still running and an icing condition has been detected, the turbines are shut down in step 550. Thereafter, sensor data collection is continued in step 520. If no icing condition is detected in step 530, it is checked in subsequent method step 560 whether the turbines are out of operation due to a previous shut down. If not, normal operating conditions exist and data collection is continued in step 520. However, if it is detected in step 560 that the turbines are down and that no icing condition exists (step 530), the turbines may be restarted in step 570. Aside from icing conditions, there exist other reasons for shutting down the wind turbines in the windfarm, e.g. grid failure, maintenance work, excessive wind speed or the like. It will be understood by those skilled in the art that in step 570 also these other reasons will be checked before restarting the turbines. In other words, the flow chart shown in Fig. 5 focuses on the icing-related aspects of windfarm control and ignores other aspects which also play an important role. However, those skilled in the art are aware of those other aspects and may include them into the control scheme shown in Fig. 5 as a mere matter of routine.

In one embodiment, all the wind turbines comprised in the windfarm are simultaneously shut down on the basis of the detected icing condition. Likewise, all the wind turbines comprised in the windfarm may simultaneously restarted on the basis of the detected icing condition. In particular, the wind turbines may be brought back up online when an ice-free condition is detected by a web cam provided as a sensor for an ice-free condition.

This written description uses examples to disclose embodiments, including the preferred mode, and also to enable any person skilled in the art to make and use such embodiments. While various specific embodiments have been described, those skilled in the art will recognize other embodiments can be practiced with modification within the spirit and scope of the claims. Especially, mutually non-exclusive features of the embodiments described above may be combined with each other. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A windfarm (1000) comprising
a plurality of wind turbines (100, 110),
an ice detection sensor (200) adapted to detect an icing condition of at least one of said plurality of wind turbines (100, 110), and
a main controller (300) connected to said ice detection sensor (200) and to at least two of said wind turbines (100, 110), wherein the main controller (300) is adapted to control the operation of said at least two wind turbines (100, 110) based on an icing condition detected by said ice detection sensor (200).

2. The windfarm according to claim 1, wherein the ice detection sensor (200) is mounted separately from the plurality of wind turbines (100).

3. The windfarm according to claim 1, wherein the ice detection sensor (200) is mounted on one of the wind turbines (110).

4. The windfarm according to any of the preceding claims, wherein the main controller (300) is connected to the turbine controllers (120) at each individual wind turbine (100), wherein the main controller (300) is adapted to control said turbine controllers (120).

5. The windfarm according to any of the preceding claims, wherein the main controller (300) is adapted to shut down all the wind turbines (100, 110) comprised in the windfarm (1000) on the basis of an icing condition detected by said ice detection sensor (200).

6. The windfarm according to any of the preceding claims, wherein the main controller (300) is adapted to start up said at least two wind turbines (100, 110) on the basis of an icing condition detected by said ice detection sensor (200).

7. The windfarm according to any of the preceding claims, further comprising a web cam (400) for detecting an ice-free condition of at least one wind turbine (100) of said plurality of wind turbines.

8. A method for controlling the operation of wind turbines (100,110) in a windfarm (1000), comprising the steps of:
detecting an icing condition of at least one wind turbine comprised in the wind farm, and
controlling the operation of at least two wind turbines comprised in the wind farm on the basis of the detected icing condition of said at least one wind turbine.

9. The method according to claim 8, wherein all the wind turbines (100,110) comprised in the windfarm (1000) are simultaneously shut down on the basis of the detected icing condition.

10. The method according to claim 8 or 9, wherein all the wind turbines (100,110) comprised in the windfarm (1000) are brought back up online when an ice-free condition is detected by a web cam (400).
